# EUROPÄISCHE PATENTSCHRIFT

(11) **EP 1 955 900 B1**
(45) Veröffentlichungstag und Bekanntmachung des Hinweises auf die Patenterteilung: **12.01.2011**
(21) Anmeldenummer: 08002350.0
(22) Anmeldetag: 08.02.2008
(51) Int. Cl.: B60R 15/02

(54) **Fahrzeug**
Vehicle
Véhicule

(30) Priorität: 08.02.2007 DE 202007002112 U
(43) Veröffentlichungstag der Anmeldung: 13.08.2008
(73) Patentinhaber: Frankia Pilote GmbH & Co. KG, 95509 Marktschorgast (DE)
(72) Erfinder: Hoang, Giam, 95463 Bindlach (DE)
(74) Vertreter: Ernicke, Klaus Stefan

(56) Entgegenhaltungen:
- DE-A1- 2 308 235
- DE-U1- 9 301 674
- GB-A- 1 521 681
- JP-A- 11 221 172
- JP-A- 2000 096 660
- US-A- 5 261 127

## Beschreibung

Die Erfindung betrifft ein Fahrzeug, insbesondere ein Wohnmobil oder einen Wohnwagen, mit den Merkmalen im Oberbegriff des Hauptanspruchs.

Die DE 20 2004 017 165 U1 zeigt ein solches Fahrzeug mit einer Vario-Nasszelle, in der ein Waschbecken seitenverschwenkbar angeordnet ist. Das Waschbecken kann hierbei zwischen einem Wasch-/Duschraum und einem Toilettenraum hin- und hergeschwenkt werden. Hierbei soll bei weggeschwenktem Waschbecken ein freier Duschraum gebildet werden.

Eine ähnliche Vario-Nasszelle ist auch aus der DE 297 01 860 U1 bekannt und besitzt ebenfalls ein seitenverschwenkbares Waschbecken.

Die DE 23 08 235 A1 zeigt einen Wohnwagen mit einer kombinierten Wasch- und Duscheinrichtung, bei der das Waschbecken zu Duschzwecken wegklappbar ist.

Aus der GB 1 521 681 A ist eine Sanitäreinheit für Behinderte, insbesondere Rollstuhlfahrer, bekannt, bei der mehrere Ablage- und Stützflächen in unterschiedlichen Höhen angeordnet und außerdem in der Höhe verstellbar sind. Eine der Stützflächen kann ein Handwaschbecken beinhalten und ist neben einem Toilettensitz angeordnet. Das Waschbecken kann in unterschiedliche Gebrauchshöhen eingestellt und dadurch an unterschiedliche Behinderungserfordernisse angepasst werden.

Die JP 2000-096660 A lehrt die Befestigung einer Ablageplatte mit einem angeformten Waschbecken in interschiedliche Gebrauchshöhen an vertikalen Ständern zur Vermeidung einer Wandmontage.

In der JP 11-221172 A ist eine höhenverstellbare Ablageplatte offenbart.

Es ist Aufgabe der vorliegenden Erfindung, eine verbesserte Waschbeckenanordnung für den Sanitärbereich von Fahrzeugen, insbesondere Wohnmobilen oder Wohnwagen aufzuzeigen.

Die Erfindung löst diese Aufgabe mit den Merkmalen im Hauptanspruch.

Die Höhenverstellbarkeit des Waschbeckens hat den Vorteil, dass für die Waschbeckenverstellung der vorhandene und anderweitig nicht oder nur wenig benötigte Raum im Sanitärbereich benutzt wird. Hierbei ist es insbesondere von Vorteil, wenn das Waschbecken zwischen einer abgesenkten Gebrauchsstellung und einer angehobenen Ruhestellung im Deckenbereich verstellbar ist. In dieser Ruhestellung ist unter dem Waschbecken genügend Bewegungsraum vorhanden. Durch die beanspruchte Waschbeckenanordnung wird Platz gespart, wobei der gewonnene Platz nun anderen Bereichen des Grundrisses im Fahrzeug zugeordnet und dort genutzt werden kann.

Unter dem Waschbecken kann ein Unterbau beliebiger Art angeordnet sein. Eine besonders günstige Variante ergibt sich bei der Anordnung einer Toilette unter dem Waschbecken. Der Raum kann dadurch doppelt als Waschraum oder Toilettenraum benutzt werden, wobei der vorhandenen Grundriss bzw. die gegebene Grundfläche optimal ausgenutzt werden können. Während der Toilettenbenutzung bleibt das Waschbecken in Ruhestellung unter der Decke, wobei unterhalb des Waschbeckens genügend Steh- und Sitzhöhe für die Toilettenbenutzung vorhanden ist. Die Höhenverstellbarkeit des Waschbeckens ermöglicht außerdem eine ergonomisch günstige Waschbeckenlage in der Gebrauchsstellung. Für Kinder kann das Waschbecken tiefer heruntergezogen werden als für Erwachsene.

Die Höhenverstellung kann vertikal oder schräg sein. Durch eine schräge Höhenverstellung kann das Waschbecken vom Benutzer in zwei Richtungen weg bewegt werden, wodurch in der angehobenen Ruhestellung in besonderem Maße Bewegungsraum und Kopffreiheit in der Höhe und nach hinten gewonnen wird. In der abgesenkten Gebrauchsstellung kann das Waschbecken ein Stück über den Unterbau oder die Toilette vorstehen, wodurch ein vergrößerter Fußraum erzielt wird. Durch diese Schrägverstellung wird der vorhandene Raum im Sanitärbereich noch besser ausgenutzt. Eine im wesentlichen vertikale Höhenverstellung hat den Vorteil eines vergrößerten Waschbeckenabstands von der benachbarten Wand, insbesondere im Deckenbereich, was die Möglichkeit für einen vergrößerten und/oder leichter erreichbaren Schrank- oder Regalraum bietet. Eine ausreichende Kopffreiheit ist dabei immer noch gegeben.

Das höhenverstellbare Waschbecken kann in Verbindung mit unterschiedlichsten Grundrissen und Raumgestaltungen der Sanitärbereiche von Fahrzeugen benutzt werden. Insbesondere können bei beengten Platzverhältnissen Wasch- und Toilettenraum zusammengelegt werden, wobei der gewonnene Platz einem separaten Duschraum zugute kommen kann. Das höhenverstellbare Waschbecken kann auch in Vario-Sanitärräumen eingebaut werden, in denen Wasch-, Toiletten- und Duschraum zu einem einzigen größeren Raum zusammengefasst sind.

Für die Höhenverstellung des Waschbeckens ist eine Hubeinrichtung vorhanden, die in verschiedener Weise ausgebildet sein kann. In den Unteransprüchen sind hierzu vorteilhafte Ausgestaltungen angegeben. Die Hubeinrichtung kann eine Fixiereinrichtung aufweisen, mit der das Waschbecken in der Ruhe- und/oder Gebrauchsstellung oder evtl. auch in Zwischenstellungen arretiert werden kann. Die Bedienung des Waschbeckens und der Fixiereinrichtung kann über einen Griff oder dgl. erfolgen, wobei die Fixierung bei der Griffbetätigung gelöst werden kann.

Bei der Höhenverstellung des Waschbeckens können die Armatur und die Leitungen mitbewegt werden, wobei eine geeignete Leitungsführung, z.B. ein Kanal mit einer Rollabdeckung, vorhanden ist. Die Armatur kann eine Doppelfunktion als Wasch- und Duscharmatur haben und in der angehobenen Ruhestellung zum Duschen benutzt werden.

Der Sanitärbereich und dessen Geräte und Einrichtungen können an das höhenverstellbare Waschbecken angepasst werden. Insbesondere können sich in Zugriffsrichtung hinter dem Waschbecken Schränke oder Schrankabteile befinden, deren Türen an die Waschbeckenlagen angepasst sind. In der angehobenen Ruhestellung können die einen Schranktüren geöffnet werden und in der absenkten Gebrauchsstellung die anderen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: einen Sanitärbereich mit einem höhenverstellbaren Waschbecken und einer Toilette in Frontansicht sowie in Ruhe- und Gebrauchsstellung des Waschbeckens,
- Figur 3 und 4:: nach links geklappte Seitenansichten der Darstellungen von Figur 1 und 2 mit den verschiedenen Waschbeckenpositionen bei einer Schrägverstellung,
- Figur 5:: eine nach links geklappte Seitenansicht bei einer Vertikalverstellung und
- Figur 6 und 7:: eine Variante des höhenverstellbaren- Waschbeckens mit einer anderen Abwasserführung in verschiedenen Waschbeckenpositionen.

Die Erfindung betrifft ein Fahrzeug (1), insbesondere ein Wohnmobil oder einen Wohnwagen, welches einen Sanitärbereich (2) mit einem Waschbecken (7) aufweist.

Der Sanitärbereich (2) kann eine beliebige Ausbildung, Form und Größe aufweisen. Er kann insbesondere mehrteilig sein und mehrere Sanitärräume umfassen. In der gezeigten Ausführungsform besitzt der Sanitärbereich (2) einen abgetrennten Toiletten- und Waschraum, der zwischen Boden (3) und Decke (4) sowie zwei Seitenwänden (6) und einer Rückwand (5) des Fahrzeugs (1) gebildet ist. An der Vorderseite weist der Raum einen verschließbaren Zugang, z.B. eine Schwenk-, Schiebe- oder Falttüre auf. Außer dem Toiletten- und Waschraum kann ein separater Duschraum (nicht dargestellt) vorhanden sein.

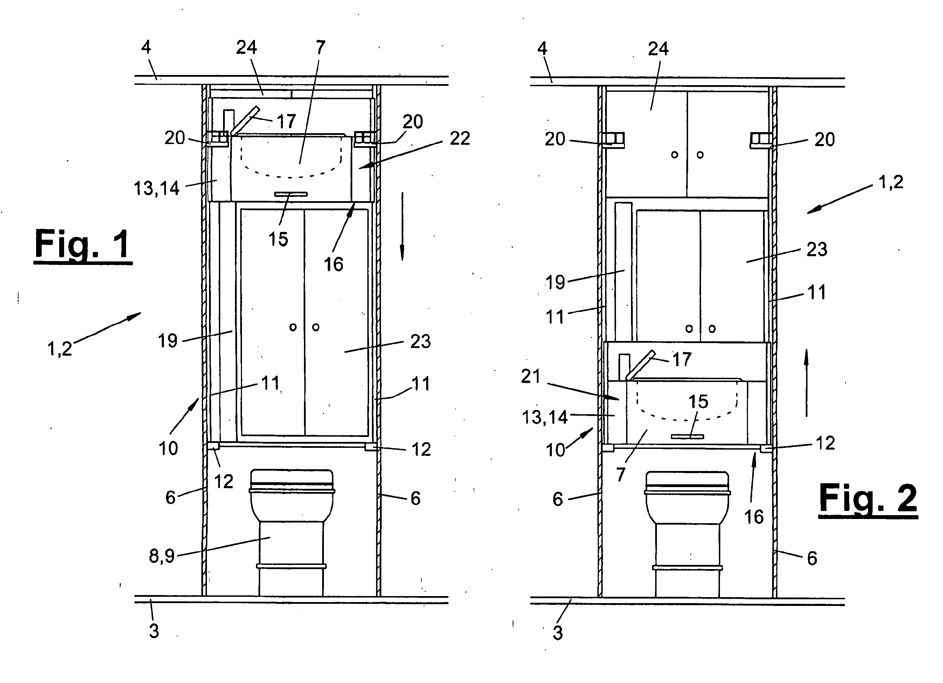

Das Waschbecken (7) ist höhenverstellbar angeordnet. Hierbei lässt es sich vorzugsweise zwischen einer in Figur 2, 4 und 6 gezeigten abgesenkten Gebrauchsstellung (21) und einer in Figur 1, 3 und 7 dargestellten angehobenen Ruhestellung (22) im Deckenbereich hin und her verstellen. Das Waschbecken (7) kann außerdem bei Bedarf Zwischenstellungen einnehmen. Beispielsweise lässt es sich in der abgesenkten Gebrauchsstellung (21) auf eine für Erwachsene und für Kinder unterschiedliche Bedienhöhe einstellen.

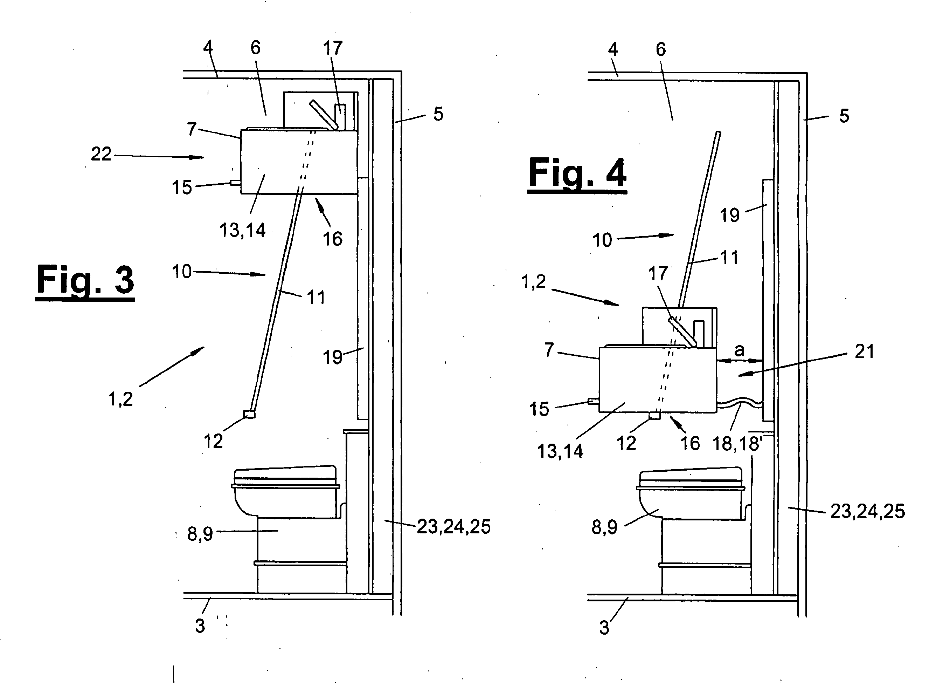

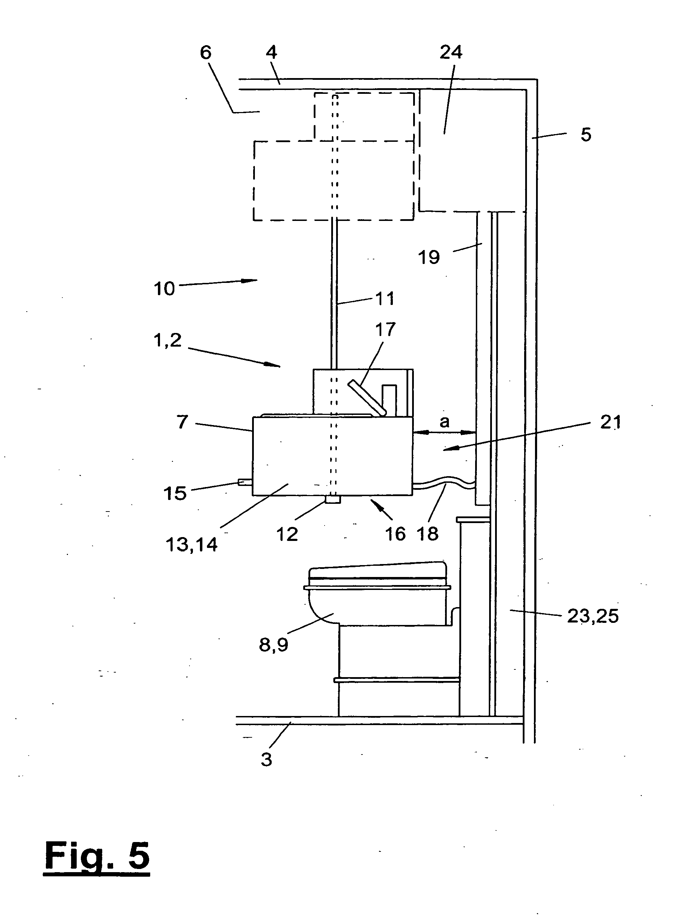

Das Waschbecken (7) kann in Vertikalrichtung oder in Schrägrichtung höhenverstellbar sein. Die Figuren 3, 4 und 6, 7 zeigen eine Schrägverstellung und Figur 5 eine Vertikalverstellung. Bei der vertikalen Höhenverstellung bleibt der Waschbeckenabstand a von der benachbarten Wand, insbesondere der Rückwand (5), gleich, wobei dieser Abstand oder Freiraum, insbesondere im Deckenbereich, zusätzlich genutzt werden kann, z.B. mit einem entsprechend weit vorragenden Schrank- oder Regalraum (24) oder einem sonstigen Nutzraum. Diese Variante ist in Figur 5 gestrichelt dargestellt.

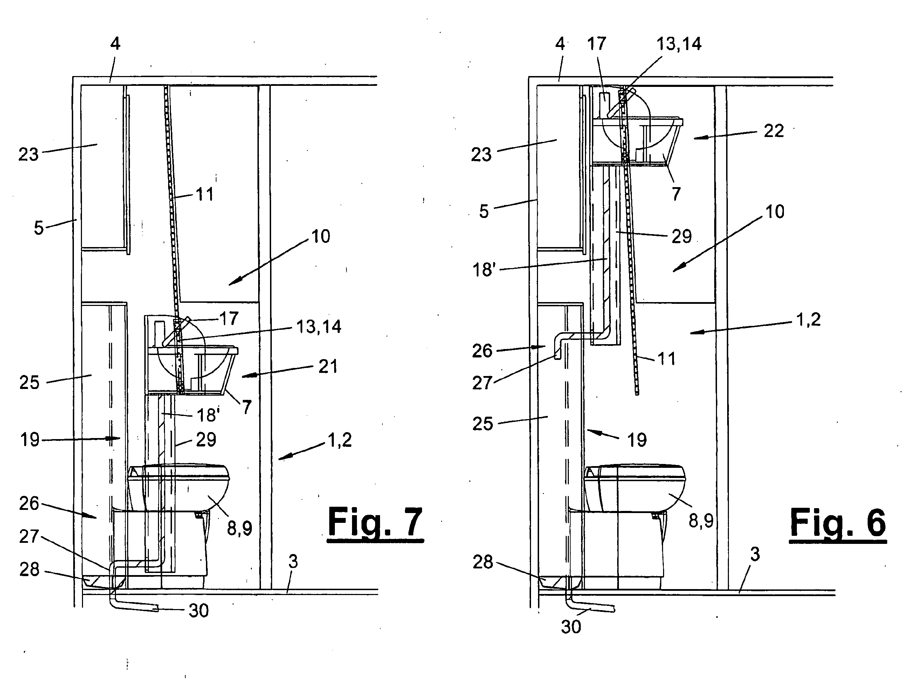

Bei einer Schrägverstellung wird das Waschbecken (7) vorzugsweise vom Benutzer in zwei Richtungen nach oben und nach hinten weg bewegt. In der angehobenen Ruhestellung (22) nimmt es eine gegenüber der abgesenkten Gebrauchsstellung (21) rückversetzte Lage ein. In der Ruhestellung (22) befindet sich das Waschbecken (7) z.B. nahe der Rückwand (5), wodurch an der Beckenfront die Kopffreiheit und der Bewegungsraum für den Benutzer weiter vergrößert und verbessert werden. Figur 3 und 6 zeigen diese Anordnung mit dem kleinen oder entfallenden Abstand. In der in Figur 4 und 7 dargestellten Gebrauchsstellung (21) ist das Waschbecken (7) von der Rückwand (5) mit dem vergrößerten Abstand a weiter entfernt, wodurch Fußraum unter dem Waschbecken (7) gewonnen werden kann.

Das Waschbecken (7) kann über einen Unterbau (8) angeordnet sein. Dieser Unterbau kann eine beliebige Anordnung und Funktion haben. Es kann sich beispielsweise um einen Behälter, insbesondere einen Schrank oder eine Truhe, oder ein Gerät, z.B. eine von oben zu beladende Waschmaschine oder dergl. handeln. In der gezeigten Ausführungsform ist der Unterbau als Toilette (9) ausgeführt. In der abgesenkten Gebrauchsstellung (21) wird die Toilette (9) vom Waschbecken (7) abgedeckt, wobei durch die schräge Höhenverstellung ein in der Tiefe ausreichender Fußraum gegenüber der Toilette (9) oder einem anderen Unterbau (8) geschaffen wird. In der Ruhestellung nahe an der Decke (4) kann die Toilette (9) benutzt werden, wobei ausreichend Steh- und Sitzhöhe vorhanden ist. Auch durch die schräge Höhenverstellung gewonnene Kopffreiheit in Ruhestellung (22) kommt der bequemen Toilettenbenutzung zugute.

An der Rückwand (5) oder an anderer Stelle im Sanitärbereich (2), können ein oder mehrere Schränke oder Schrankabteile (23,24) vorhanden sein. Der Schrank kann einteilig und in der Höhe durchgehend ausgebildet sein. Alternativ kann er zwei oder mehr übereinander liegende Schrankabteile besitzen. Der oder die Schränke oder Schrankabteile (23,24) besitzen z.B. in der Höhe unterteilte Türen, deren Unterteilungs- und Höhenmäß an die verschiedenen Höhenlagen des Waschbeckens (7) angepasst sind. In Figur 1 und 2 sind beispielsweise zwei übereinander liegende Schrankabteile (23,24) angeordnet, deren Türenhöhe derart aufeinander abgestimmt ist, dass in der angehobenen Ruhestellung (22) die Türen des unteren Schrankabteils (23) frei liegen und geöffnet und geschlossen werden können. In der abgesenkten Gebrauchsstellung (21) liegen die Schwenktüren des oberen Schrankabteils (24) frei. In Figur 5 ist ein oberes Schrankabteil (24) dargestellt, welches nach vorn zum Waschbecken (7) vorspringt.

In Abwandlung der gezeigten Ausführungsformen können die Türen statt als Schwenktüren auch als Schiebetüren, Rolltüren, Rollladen, Falttüren oder dergl. ausgebildet sein. Ferner können die Türflächen, insbesondere diejenigen des unteren Schrankabteils (23) als Spiegel ausgebildet sein.

Das Waschbecken (7) kann in der Draufsicht (nicht dargestellt) eine Ω-förmige Gestalt haben, wobei seitlich neben dem vorspringenden Beckenteil Freiräume entstehen. Diese Freiräume können für Ablagen (20) oder andere Anbauten an den Seitenwänden (6) genutzt werden. Die Ablagen (20) können offene Regalbrettchen mit Geländer, kleine Schränke oder dergl. sein. Sie befinden sich an einer gebrauchsgünstigen und behinderungsfreien Stelle, z.B. in der Nähe der Decke (4), wodurch die Kopf- und Bewegungsfreiheit nicht eingeschränkt und der vorhandene Raum ausgenutzt wird. Durch ausreichenden Abstand zum Schrankabteil (24) können dessen Türen ausreichend weit geöffnet werden.

Das Waschbecken (7) besitzt zur Höhenverstellung eine Hubeinrichtung (10). Diese kann unterschiedlich ausgebildet sein. Die Höhenverstellung des Waschbeckens (7) kann von Hand und nur mit Handkraft oder mit Unterstützung durch eine Feder oder dergl. geschehen. Auch eine maschinelle oder automatische Ausführung mit Schalter und einem motorischen Antrieb, z.B. mit einem Elektromotor und einem Riemen-, Zahnstangen- oder Spindeltrieb oder dgl., ist möglich.

Die Hubeinrichtung (10) weist eine Führung (11) für das Waschbecken (7) und dessen Höhenverstellung auf. Die Führung (11) kann in unterschiedlicher Weise gestaltet sein und ist z.B. entsprechend den gezeigten Ausführungsbeispielen als Schienenführung ausgebildet. Diese weist zwei parallele Schienenstücke auf, die an den Seitenwänden (6) befestigt sind. Die Schienenführung (11) und ihre Schienenstücke haben die in Figur 3, 4 und 6, 7 gezeigte Schräglage oder die in Figur 5 dargestellte im wesentlichen vertikale Ausrichtung. Die Schienenführung (11) hat eine gerade Erstreckung. Alternativ kann sie eine gebogene Form haben. In weiterer Abwandlung kann die Führung (11) als Schwenkführung ausgebildet sein. Auch eine doppelte Schienenführung mit einem vertikalen Schienenabschnitt und einem oben anschließenden horizontalen, schrägen oder gewundenen Schienenabschnitt ist möglich.

Die Hubeinrichtung besitzt eine Fixiereinrichtung (16) zum Festhalten des Waschbeckens (7) in der Ruhe- und/oder Gebrauchsstellung (21,22). Bei geeigneter Ausbildung der Fixiereinrichtung (16) ist auch die Einnahme von Zwischenstellungen möglich. Die Fixiereinrichtung (16) kann in beliebig geeigneter Weise ausgebildet sein. Sie kann z.B. eine kraftschlüssige Brems- oder Klemmeinrichtung aufweisen, die an der Führung (11) oder an anderer geeigneter Stelle angreift. Die Bremseinrichtung kann z.B. federbelastete Bremsbacken oder Keile besitzen, die für eine Arretierung sorgen. Alternativ kann die Fixiereinrichtung (16) eine formschlüssige Rasteinrichtung aufweisen, in der Rastbolzen, Riegel, Schnapper oder dergl. formschlüssig in entsprechende Aufnahmen gleichen. Die Rastelemente können am Waschbecken (7) und die Aufnahmen stationär an der Führung (11) oder an ein oder mehreren Wänden (5,6) angeordnet sein. Im Bereich am unteren Ende der Führung (11) kann auch ein Anschlag (12) vorgesehen sein, der die Waschbeckenbewegung nach unten begrenzt. Desgleichen kann auch ein nach oben begrenzender Anschlag im Bereich des oberen Schienenendes (nicht dargestellt) vorhanden sein.

Für die manuelle Verstellung des Waschbeckens (7) kann ein geeignetes Hilfsmittel, z.B. ein Griff (15), eine Griffmulde oder dergl. an der Beckenvorderseite angeordnet sein. Dieser Griff (15) kann mit einer Vorrichtung zur Betätigung der Fixiereinrichtung (16) kombiniert sein. Dies kann z.B. ein Schwenk- oder Druckhebel zum Lösen der Brems-, Klemm- oder Rasteinrichtung oder dergl. sein. Diese Anordnung ermöglicht eine Einhandbedienung, wobei über den Griff (15) das Waschbecken (7) auf die gewünschte Höhe gezogen oder geschoben werden kann, wobei nach loslassen des Griffs (15) das Waschbecken (7) automatisch in der gewünschten Lage festgehalten wird.

Das Waschbecken (7) weist eine an die Höhenverstellung angepasste Gestaltung auf. Beispielsweise kann das Waschbecken (7) ein Beckenteil und ein das Beckenteil umgebendes und mit der Führung (11) verbundenes Gestell (13) kann an der Rückseite und an beiden Seitenflächen hochstehende Blenden besitzen, die als Spritzschutz oder zu anderen Zwecken dienen können. Das Beckenteil ist vorn und seitlich ebenfalls von Blenden umgeben, die auch die an der Beckenunterseite vorhandenen Wasserabläufe und Anschlüsse verdecken. Das Gestell (13) kann als Schlitten (14) zum Zusammenwirken mit der Führung (11) ausgebildet sein. Der Schlitten (14) kann Laufrollen zum Eingriff an den Führungsschienen und ggf. auch Teile der Fixiereinrichtung (16) besitzen.

Am Waschbecken (7) ist neben dem Beckenteil eine Armatur (17) angeordnet. Die Armatur (17) kann am Waschbecken (7) befestigt sein und mit diesem mitbewegt werden. Sie kann alternativ stationär angeordnet sein und einen verstellbaren Wasserauslauf besitzen, der in der Gebrauchstellung (21) über das Beckenteil geschoben oder geschwenkt werden kann. Für die Höhenverstellung des Waschbeckens (7) kann der Wasserauslauf zur Seite bewegt und aus dem Bewegungsbereich des Waschbeckens (7) gebracht werden.

Die Armatur (17) kann als reine Waschbeckenarmatur ausgebildet sein. Sie kann alternativ multifunktional sein und z.B. auch als Duscharmatur dienen. Hierzu kann die Armatur (7) lösbar am Waschbecken (7) angebracht sein. Sie kann alternativ angeordnet und ausgebildet sein, dass in der angehobenen Ruhestellung (22) der Wasserauslauf verschwenkt oder verschoben werden kann und über die Waschbeckenkontur hinaus ragt.

Das Waschbecken (7) weist Leitungen (18,18') für die Wasserzufuhr und für das Abwasser auf, die den Höhenverstellungen des Waschbeckens (7) folgen und mitbewegt werden können. Die Zufuhr kann getrennte Warm- und Kaltwasserleitungen haben, wobei die Armatur (17) als Mischbatterie ausgebildet ist.

Für die Leitungsgestaltung gibt es verschiedene Ausführungsbeispiele. Die Leitungen (18,18') können z.B. gemäß Figur 4 und 5 flexibel und als Schleppleitungen ausgebildet sein. Bei der Höhenverstellung bleiben die mitbewegten Leitungen (18) z.B. verborgen. Sie werden von der Rück- oder Unterseite des Waschbeckens (7) zur Rückwand (5) geführt. Hierfür kann die Hubeinrichtung (10) eine Leitungsführung (19) aufweisen, die z.B. als der in Figur 1 und 2 gezeigte stationäre Führungskanal (19) im Rückwandbereich ausgebildet ist. Der Kanal kann eine mit dem Waschbecken (7) und der Leitungszuführung verbundene Rollabdeckung aufweisen. Die stationären Leitungsanschlüsse können an verborgener Stelle, z.B. im Bereich einer Wand (5,6) insbesondere der Rückwand (5), untergebracht sein. Hierfür kann z.B. hinter der Toilette (9) ein Anbau und ein Verstauraum (25) vorhanden sein. Der untere Schrank (23) kann mit seitlichem Versatz neben der Leitungsführung (19) angeordnet und entsprechend schmäler ausgebildet sein. Hierdurch wird seitlich ein Freiraum für die Leitungsverlegung von der Leitungsführung (19) zu den stationären Anschlüssen geschaffen.

Figur 6 und 7 zeigen hierzu eine Variante. Für eine Leitung, insbesondere die Abwasserleitung (18'), kann ein Trichterfang (26) vorgesehen sein. Am Boden des Waschbeckens (7) und an dessen Ausguss ist eine starre Abwasserleitung (18') angeordnet, die sich zunächst im wesentlichen senkrecht nach unten erstreckt und am Endbereich einen doppelten Rohrknick mit einem Querstück aufweist, welches am Ende in einen nach unten gerichteten Auslaufstutzen (27) übergeht. Das Querstück mit dem Auslaufstutzen (27) taucht in einen vor der Rückwand (5) befindlichen Stauraum (25) ein, der an der Frontseite eine ähnliche Leitungsführung (19) wie im vorigen Ausführungsbeispiel mit Rollabdeckung, Dichtlippe oder dgl. haben kann. Der Auslaufstutzen (27) befindet sich oberhalb eines am Bodenbereich des Stauraums (25) angeordneten Trichters (28), der seinerseits mit einem unterhalb des Bodens (3) befindlichen Ablauf (30) verbunden ist. Die Abwasserleitung (18') kann von einem Gehäuse (29) umgeben sein, welches sich parallel zur Leitung (18') vom Beckenboden nach unten erstreckt und etwas über das Querstück der Leitung (18') hinausragt. Das Gehäuse (29) ist genauso wie die Abwasserleitung (18') mit dem Waschbecken (7) verbunden und wird mit diesem auf und ab bewegt.

Figur 6 zeigt die angehobene Ruhestellung (22), in der der mitbewegte Anschlussstutzen (27) mit Abstand über dem Trichter (28) schwebt. Figur 7 zeigt die Gebrauchsstellung (21), in der der abgesenkte Auslaufstutzen (27) in den Trichter (28) taucht und dabei ggf. auch in den nach oben gerichteten Stutzen des Ablaufs (30) eintaucht oder dicht an diesen anschließt. In der Gebrauchsstellung (21) ist dadurch eine sichere Abwasserführung gewährleistet. In der angehobenen Ruhestellung (22) ist ein Tropfschutz durch den Trichter (28) und die umgebenden Wände des Verstauraums (25) bzw. der Leitungsführung (19) gegeben. Das Waschbecken (7) und die Abwasserleitung (18') sowie das Gehäuse (29) können in diesem Ausführungsbeispiel seitlich versetzt neben dem Unterbau (8) bzw. der Toilette (9) angeordnet sein.

Die Frischwasserleitung (18) und deren Leitungsführung (19) kann wie im ersten Ausführungsbeispiel gestaltet sein. Ferner ist es möglich, die Frischwasserleitung (18) an einer anderen geeigneten Stelle zu verlegen, z. B. auch in der Führung (11).

Abwandlungen der gezeigten Ausführungsformen sind in verschiedener Weise möglich. Das Waschbecken (7) kann beispielsweise fliegend an einer einzelnen seitlichen Führung (11) oder an einer rückseitigen Führung gelagert sein. Zumindest eine der in Figur 1 und 2 gezeigten Seitenwände (6) kann entfallen. Der gezeigte Waschraum kann dann seitlich erweitert werden, wodurch ein größerer zusammenhängender Sanitärraum gebildet werden kann. Das höhenverstellbare Waschbecken (7) lässt sich auch in einem kombinierten Wasch- und Duschraum unterbringen, wobei es zum Duschen in die angehobene Ruhestellung (22) gebracht wird. In diesem Fall kann auf einen Unterbau (8) oder eine Toilette (9) verzichtet werden. Der Unterbau (8) kann alternativ schmaler ausgeführt sein, um genügend Grundfläche für den Duschraum bereit zu stellen.

Ferner kann die Höhenverstellung mit ein oder mehreren weiteren Beweglichkeiten kombiniert werden, indem z.B. das Waschbecken in der angehobenen Ruhestellung oder in anderer Höhenlage seitlich in eine deckennahe Nische oder dgl. weggeschwenkt oder gekippt oder abgeklappt wird.

Im weiteren können die konstruktiven Ausgestaltungen des Waschbeckens (7) der Hubeinrichtung (10) und der Fixiereinrichtung (16) abgewandelt werden.

### BEZUGSZEICHENLISTE

- 1: Fahrzeug, Wohnmobil, Wohnwagen
- 2: Sanitärbereich
- 3: Boden
- 4: Decke
- 5: Wand, Rückwand
- 6: Wand, Seitenwand
- 7: Waschbecken
- 8: Unterbau
- 9: Toilette
- 10: Hubeinrichtung
- 11: Führung, Schiene
- 12: Anschlag
- 13: Gestell
- 14: Schlitten
- 15: Griff
- 16: Fixiereinrichtung
- 17: Armatur
- 18: Leitung, Frischwasser
- 18': Leitung, Abwasser
- 19: Leitungsführung, Führungskanal
- 20: Ablage
- 21: Gebrauchsstellung
- 22: Ruhestellung
- 23: Schrank, Schrankabteil
- 24: Schrank, Schrankabteil
- 25: Verstauraum
- 26: Trichterfang
- 27: Auslaufstutzen
- 28: Trichter
- 29: Gehäuse
- 30: Ablauf

- a: Waschbeckenabstand

## Patentansprüche

1. Fahrzeug, insbesondere Wohnmobil oder Wohnwagen, mit einem Sanitärbereich (2) und einem höhenverstellbaren Waschbecken (7), **dadurch gekennzeiehnet, dass** das Waschbecken (7) zwischen einer abgesenkten Gebrauchsstellung (21) und einer angehobenen Ruhestellung (22) im Deckenbereich im wesentlichen vertikal oder schräg verstellbar ist.

2. Fahrzeug nach Anspruch 1, **dadurch gekennzeichnet, dass** bei einer schrägen Höhenverstellung die angehobene Ruhestellung (22) des Waschbeckens (7) hinter der abgesenkten Gebrauchsstellung (21) liegt.

3. Fahrzeug nach Anspruch 1 oder 2, **dadurch gekennzeichnet, dass** das Waschbecken (7) eine Hubeinrichtung (10) aufweist, die manuell mit einem Griff (15) und mit Federunterstützung betätigbar ist oder einen elektromotorischen Antrieb aufweist.

4. Fahrzeug nach Anspruch 1,2 oder 3, **dadurch gekennzeichnet, dass** das Waschbecken (7) über einem Unterbau (8) und/oder über einer Toilette (9) angeordnet ist.

5. Fahrzeug nach einem der vorhergehenden Ansprüche, **dadurch gekennzeichnet, dass** die Hubeinrichtung (10) eine Führung (11) für das Waschbecken (7) aufweist.

6. Fahrzeug nach einem der vorhergehenden Ansprüche, **dadurch gekennzeichnet, dass** die Führung (11) als Schienenführung ausgebildet ist und zwei parallele, vertikal oder mit Schräglage an den Seitenwänden (6) des Sanitärbereichs (2) angeordnete Schienenstücke aufweist.

7. Fahrzeug nach einem der vorhergehenden Ansprüche, **dadurch gekennzeichnet, dass** die Hubeinrichtung (10) eine Fixiereinrichtung (16) zum Festhalten des Waschbeckens (7) in der Ruhe- und/oder Gebrauchsstellung (21,22) aufweist.

8. Fahrzeug nach einem der vorhergehenden Ansprüche, **dadurch gekennzeichnet, dass** das Waschbecken (7) einen Griff (15) mit einer Vorrichtung zur Betätigung einer Fixiereinrichtung (16) aufweist.

9. Fahrzeug nach einem der vorhergehenden Ansprüche, **dadurch gekennzeichnet, dass** das Waschbecken (7) ein umgebendes und mit der Führung (11) verbundenes und als Schlitten (14) ausgebildetes Gestell (13) aufweist.

10. Fahrzeug nach einem der vorhergehenden Ansprüche, **dadurch gekennzeichnet, dass** das Waschbecken (7) ein Beckenteil und eine Armatur (17) sowie mitbewegbare Leitungen (18,18') aufweist.

11. Fahrzeug nach einem der vorhergehenden Ansprüche, **dadurch gekennzeichnet, dass** die Leitungen (18,18') flexibel ausgebildet sind oder einen Trichterfang (26) aufweisen, wobei die Hubeinrichtung (10) eine Leitungsführung (19) zum Mitbewegen der Leitungen (18) bei der Höhenverstellung aufweist.

12. Fahrzeug nach einem der vorhergehenden Ansprüche, **dadurch gekennzeichnet, dass** an der Wand (5) hinter dem Waschbecken (7), insbesondere der Rückwand, ein oder mehrere Schränke oder Schrankabteile (23,24) angeordnet sind, die in der Ruhestellung (22) und der Gebrauchsstellung (21,22) des Waschbeckens (7) abwechselnd zugänglich sind.

13. Fahrzeug nach einem der vorhergehenden Ansprüche, **dadurch gekennzeichnet, dass** im Bereich der Wand (5), insbesondere der Rückwand, ein Verstauraum (25) für die Leitungen (18) und ggf. für deren fahrzeugseitige Anschlüsse angeordnet ist.

## Claims

1. Vehicle, in particular motor home or caravan, with a sanitary region (2) and a vertically displaceable washbasin (2), **characterized in that** the washbasin (7) can be displaced substantially vertically or obliquely between a lowered use position (21) and a raised inoperative position (22) in the ceiling region.

2. Vehicle according to Claim 1, **characterized in that**, in the event of an oblique vertical displacement, the raised inoperative position (22) of the washbasin (7) is located behind the lowered use position (21).

3. Vehicle according to Claim 1 or 2, **characterized in that** the washbasin (7) has a lifting device (10) which can be actuated manually by a handle (15) and with the assistance of a spring, or has an electromotive drive.

4. Vehicle according to Claim 1, 2 or 3, **characterized in that** the washbasin (7) is arranged over a substructure (8) and/or over a toilet (9).

5. Vehicle according to one of the preceding claims, **characterized in that** the lifting device (10) has a guide (11) for the washbasin (7).

6. Vehicle according to one of the preceding claims, **characterized in that** the guide (11) is designed as a rail guide and has two parallel rail pieces arranged vertically or with an oblique position on the sidewalls (6) of the sanitary region (2).

7. Vehicle according to one of the preceding claims, **characterized in that** the lifting device (10) has a fixing device (16) for securing the washbasin (7) in the inoperative and/or use position (21, 22).

8. Vehicle according to one of the preceding claims, **characterized in that** the washbasin (7) has a handle (15) with a device for actuating a fixing device (16).

9. Vehicle according to one of the preceding claims, **characterized in that** the washbasin (7) has a surrounding frame (13) which is connected to the guide (11) and is designed as a slide (14).

10. Vehicle according to one of the preceding claims, **characterized in that** the washbasin (7) has a basin part and a fitting (17) and also pipes (18, 18') which are movable at the same time.

11. Vehicle according to one of the preceding claims, **characterized in that** the pipes (18, 18') are of flexible design or have a funnel-type collector (26), the lifting device (10) having a pipe guide (19) for moving the pipes (18) at the same time as the vertical displacement.

12. Vehicle according to one of the preceding claims, **characterized in that** one or more cupboards or cupboard compartments (23, 24) are arranged on the wall (5) behind the washbasin (7), in particular on the rear wall, the cupboards or cupboard compartments being alternately accessible in the inoperative position (22) and in the use position (21, 22) of the washbasin (7).

13. Vehicle according to one of the preceding claims, **characterized in that** a storage space (25) for the pipes (18) and, if appropriate, for the connections thereof to the vehicle is arranged in the region of the wall (5), in particular the rear wall.

## Revendications

1. Véhicule, en particulier mobil home ou caravane, comprenant une zone sanitaire (2) et un lavabo déplaçable en hauteur (7), **caractérisé en ce que** le lavabo (7) peut être déplacé essentiellement verticalement ou obliquement entre une position d'utilisation abaissée (21) et une position de repos soulevée (22) dans la partie du plafond.

2. Véhicule selon la revendication 1, **caractérisé en ce que** dans le cas d'un déplacement oblique en hauteur, la position de repos soulevée (22) du lavabo (7) est située derrière la position d'utilisation abaissée (21).

3. Véhicule selon la revendication 1 ou 2, **caractérisé en ce que** le lavabo (7) présente un dispositif de levage (10), qui peut être actionné manuellement avec une poignée (15) et avec une assistance par ressort ou qui présente un entraînement par moteur électrique.

4. Véhicule selon la revendication 1, 2 ou 3, **caractérisé en ce que** le lavabo (7) est disposé par-dessus un meuble sous-jacent (8) et/ou par-dessus un WC (9).

5. Véhicule selon l'une quelconque des revendications précédentes, **caractérisé en ce que** le dispositif de levage (10) présente un guide (11) pour le lavabo (7).

6. Véhicule selon l'une quelconque des revendications précédentes, **caractérisé en ce que** le guide (11) est réalisé sous forme de guide à coulisse et présente deux éléments de coulisse parallèles disposés verticalement ou obliquement sur les parois latérales (6) de la zone sanitaire (2).

7. Véhicule selon l'une quelconque des revendications précédentes, **caractérisé en ce que** le dispositif de levage (10) présente un dispositif de fixation (16) pour fixer le lavabo (7) dans la position de repos et/ou dans la position d'utilisation (21, 22).

8. Véhicule selon l'une quelconque des revendications précédentes, **caractérisé en ce que** le lavabo (7) présente une poignée (15) avec un dispositif pour l'actionnement d'un dispositif de fixation (16).

9. Véhicule selon l'une quelconque des revendications précédentes, **caractérisé en ce que** le lavabo (7) présente un bâti périphérique (13) connecté au guide (11) et réalisé sous forme de chariot (14).

10. Véhicule selon l'une quelconque des revendications précédentes, **caractérisé en ce que** le lavabo (7) présente une partie de bassin et une armature (17) ainsi que des conduites déplaçables en même temps (18, 18').

11. Véhicule selon l'une quelconque des revendications précédentes, **caractérisé en ce que** les conduites (18, 18') sont flexibles ou présentent un entonnoir de captage (26), le dispositif de levage (10) présentant un guide de conduite (19) pour déplacer les conduites (18) en même temps lors du déplacement en hauteur.

12. Véhicule selon l'une quelconque des revendications précédentes, **caractérisé en ce qu'**une ou plusieurs armoires ou une ou plusieurs portions d'armoire (23, 24) sont disposées sur la paroi (5) derrière le lavabo (7), en particulier sur la paroi arrière, ces armoires ou portions d'armoire étant accessibles en alternance dans la position de repos (22) et dans la position d'utilisation (21, 22) du lavabo (7).

13. Véhicule selon l'une quelconque des revendications précédentes, **caractérisé en ce que** dans la région de la paroi (5), en particulier de la paroi arrière, est disposé un espace de rangement (25) pour les conduites (18) et éventuellement pour leur raccordement du côté du véhicule.
